# EUROPÄISCHE PATENTSCHRIFT

(11) **EP 1 129 236 B1**
(45) Veröffentlichungstag und Bekanntmachung des Hinweises auf die Patenterteilung: **26.02.2003**
(21) Anmeldenummer: 99947436.4
(22) Anmeldetag: 29.09.1999
(51) Int. Cl.: C23F 11/14, C23F 11/10, C09K 5/20

(54) **MOTORENEINLAUFMITTEL**
ENGINE RUNNING-IN AGENT
LIQUIDE DE REFROIDISSEMENT POUR RODAGE DE MOTEUR

(30) Priorität: 08.10.1998 DE 19846434
(43) Veröffentlichungstag der Anmeldung: 05.09.2001
(73) Patentinhaber: Haertol Chemie GmbH, 39126 Magdeburg (DE)
(72) Erfinder: DÜHRING, Egon, D-39167 Irxleben (DE); BRINCK, Carmen, D-39291 Möser (DE)
(74) Vertreter: Weber, Thomas, Dr.Dipl.-Chem.
(86) Internationale Anmeldenummer: EP9907221
(87) Internationale Veröffentlichungsnummer: WO00022190

(56) Entgegenhaltungen:
- EP-A- 0 060 224
- EP-A- 0 112 756
- EP-A- 0 557 761
- EP-A- 0 564 721
- EP-A- 0 739 966
- DE-A- 3 416 857
- DE-A- 19 625 692
- US-A- 4 456 650
- US-A- 4 647 392
- US-A- 4 719 084
- US-A- 5 741 436
- PATENT ABSTRACTS OF JAPAN vol. 1997, no. 02, 28. Februar 1997 (1997-02-28) -& JP 08 269751 A (NIPPON CHEM KOGYO KK), 15. Oktober 1996 (1996-10-15)

## Beschreibung

Die Erfindung betrifft die Verwendung eines wäßrigen Einlaufinittel für Verbrennungsmotoren sowie die Verwendung eines Konzentrats, aus dem durch Verdünnen mit Wasser das wäßrige Motoreneinlaufmittel erhalten werden kann.

Verbrennungsmotoren wie beispielsweise Benzinmotoren (Otto-Motoren, WankelMotoren) oder Diesel-Motoren werden nach ihrer Herstellung in der Regel auf Prüfständen einlaufen lassen, bevor sie zur Endmontage freigegeben werden. Durch das Einlaufen wird die Funktionsfähigkeit der Motoren sichergestellt. Verbrennungsmotoren zum Einsatz in beispielsweise Personenwagen, Bussen, Lastwagen, Traktoren und anderen landwirtschaftlichen Fahrzeugen, Diesel-Lokomotiven oder Schiffen werden heutzutage in der Regel in spezialisierten Produktionsstätten hergestellt und an die Fahrzeughersteller versandt, die die Motoren in die vorgesehenen Fahrzeuge einbauen. Hierdurch vergeht zwischen dem Zusammenbau der Motoren und ihrem Einlaufen bzw. Prüfen und deren Einbau in die vorgesehenen Fahrzeuge eine bestimmte Zeit. Während dieser Zeit werden die Motoren in der Regel transportiert, wobei sie korrosiven Bedingungen ausgesetzt sein können. Dies gilt insbesondere für einen Seetransport. Dabei muß sichergestellt werden, daß die Motoren in dieser Zwischenzeit nicht durch Korrosion geschädigt werden. Das zum Kühlen der Verbrennungsmotoren während des Einlaufens bzw. Prüfens auf Prüfständen verwendete Kühlmittel, hier als Motoreneinlaufmittel bezeichnet, hat neben der Kühlung während des Einlaufens die zusätzliche Aufgabe, nach dem Einlaufen der Motoren bis zu deren Einbau in die vorgesehenen Fahrzeuge eine Korrosion der Motoren zu verhindern. Allerdings verbleibt das Motoreneinlaufinittel nach dem Einlaufen nicht in den Motoren. Vielmehr wird es zur Kostenersparnis zumindest weitgehend aus den Motoren abgelassen und zum Einlaufen weiterer Motoren wieder verwendet. Hierbei verbleibt jedoch ein geringer Rest in den Motoren, der die Aufgabe des Korrosionsschutzes während der Lagerung oder dem Transport der Motoren übernehmen muß. Dabei ist an diesen verbliebenen Rest des Motoreneinlaufmittels die Anforderung zu stellen, daß er mit dem nach dem Einbau der Motoren in die vorgesehenen Fahrzeuge eingefüllten Kühlmittel verträglich ist. Beispielsweise dürfen beim Vermischen von Resten des Motoreneinlaufmittels mit dem später eingefüllten Kühlmittel keine Niederschläge auftreten.

Als Motoreneinlaufmittel wurden bisher häufig Öl-in-Wasser-Emulsionen eingesetzt. Nach deren Ablassen aus den Motoren nach dem Einlaufen verbleibt ein dünner Ölfilm auf den Oberflächen, die mit dem Einlaufmittel in Kontakt gekommen sind. Dieser Ölfilm bringt eine gewisse Korrosionsschutzwirkung mit sich. Derartige Eimaufmittel weisen jedoch mehrere Nachteile auf: Die Entsorgung unbrauchbar gewordener Motoreneinlaufmittel ist wegen des Ölgehalts aufwendig und kostspielig; die Korrosionsschutzwirkung des Ölfilms ist in stark korrosiver Umgebung wie beispielsweise während eines Seetransports unzureichend; die Reste der Öl-in-Wasser-Emulsion in den Motoren sind nicht verträglich mit neuzeitlichen Motorenkühlmitteln, sondern können zu Ausfällungen führen.

Daher besteht ein Bedarf nach einem Motoreneinlaufmittel, das die genannten Nachteile nicht aufweist. Aus Kostengründen strebt man hierbei an, Motoreneinlaufmittel zu verwenden, die einen möglichst hohen Wasseranteil aufweisen. Um nicht unnötige Wassermengen transportieren zu müssen, vertreibt man die Motoreneinlaufmittel vorzugsweise in Form von Konzentraten, die am Einsatzort mit Wasser auf die gewünschte Anwendungskonzentration verdünnt werden.

Die Erfindung betrifft in einem ersten Aspekt ein Konzentrat zur Herstellung eines Motoreneinlaufmittels durch Verdünnen mit Wasser, das als Hauptkomponente ein wasserlösliches flüssigalkoholisches Gefrierpunkterniedrigungsmittel und zusätzlich eine wirksame Menge eines oder mehrerer Ammoniumsalze einer oder mehrerer Carbonsäuren einer Gruppe a) enthält, wobei die Carbonsäuren der Gruppe a) 5 bis 18 C-Atomen aufweisen. Beispielsweise kann das Konzentrat als wirksame Menge 0,5 bis 15 Gew.-%, bezogen auf die Gesamtmenge des Konzentrats, eines oder mehrerer Ammoniumsalze einer oder mehrerer Carbonsäuren einer Gruppe a) enthalten, wobei die Carbonsäuren der Gruppe a) 5 bis 18 C-Atomen aufweisen.

Dabei wirkt das wasserlösliche flüssige alkoholische Gefrierpunkterniedrigungsmittel als Lösungsmittel für die Ammoniumsalze der Carbonsäuren. Geeignete Ammoniumsalze geeigneter Carbonsäuren weisen einen ausreichend hohen Dampfdruck auf, so daß Anteile hiervon aus den nach dem Ablassen des Einlaufmittels in den Motoren verbliebenen Resten in die Dampfphase übergehen und aus der Dampfphase heraus als Korrosionsschutzmittel wirken. Sie stellen also sogenannte Dampfphasen-Korrosionsinhibitoren dar. Demnach kann angenommen werden, daß die Oberflächen der Motoren, die mit dem Einlaufmittel in Kontakt kommen, auch nach dem weitgehenden Ablassen des Motoreneinlaufmittels durch Kontakt mit einer Dampfphase vor Korrosion geschützt werden, die Ammoniumsalze der Carbonsäuren enthält.

Verbrennungsmotoren können eine Vielfalt unterschiedlicher Metalle wie beispielsweise Kupfer, Messing, Stahl, Gußeisen, Aluminium, Magnesium und deren Legierungen enthalten. Weiterhin sind üblicherweise Lötmetalle wie beispielsweise Lötzinn vorhanden. Ein geeignetes Motoreneinlaufmittel muß sowohl während des Einlaufens der Motoren als auch während der anschließenden Transport- und/oder Lagerphase alle Motorenmaterialien wirksam gegen Korrosion schützen können. Da es unterschiedlicher Korrosionsschutzmittel bedarf, um die verschiedenen Metalle vor Korrosion zu schützen, enthält das Motoreneinlaufmittel vorzugsweise weitere korrosionsschützende Komponenten. Beispielsweise ist es bevorzugt, daß das Konzentrat für das Motoreneinlaufmittel zusätzlich 0,005 bis 1 Gew.-%, bezogen auf die Gesamtmenge des Konzentrats, eines oder mehrerer Triazole enthält. Diese sind insbesondere für den Korrosionsschutz von Buntmetallen wie beispielsweise Kupfer und Messing wichtig.

Beispielsweise kann ein erfindungsgemäßes Konzentrat für ein Motoreneinlaufmittel dadurch gekennzeichnet sein, daß es, bezogen auf die Gesamtzusammensetzung,
0,005 bis 0,5 Gew.-% Tolyltriazol und/oder
0,005 bis 0,5 Gew.-% Benzotriazol,
0,5 bis 15 Gew.-% eines oder mehrerer Ammoniumsalze einer oder mehrerer Carbonsäuren einer Gruppe a) mit 5 bis 18 C-Atomen und
0,005 bis 10 Gew.-% einer oder mehrerer Carbonsäuren einer Gruppe b), die ausgewählt sind aus linearen gesättigten oder ungesättigten aliphatischen, araliphatischen oder aromatischen ein- oder mehrbasichen Carbonsäuren mit 4 bis 20 C-Atomen,
enthält, wobei der Rest zu 100 Gew-% aus dem flüssigalkoholischen Gefrierpunkterniedrigungsmittel besteht, das zusätzlich Alkalien, Wasser und/oder weitere Wirkstoffe enthalten kann.

Wenn im Rahmen dieser Erfindung von Carbonsäuren die Rede ist, sind damit generell die Säuren in protolysierter oder nicht protolysierter Form gemeint, d. h. die Säuren können als solche oder als Anionen vorliegen. Das Protolysegleichgewicht der Säuren wird sich je nach dem pH-Wert des Konzentrats bzw. des hieraus durch Verdünnen mit Wasser hergestellten Motoreneinlaufmittels gemäß der Säurekonstanten einstellen. Bei pH-Werten im Bereich zwischen etwa 7,5 und etwa 9, wie sie für die anwendungsfertigen wäßrigen Motoreneinlaufmittel üblich sind, werden die eingesetzten Säuren weitgehend in ionischer Form vorliegen. Demgemäß ist es bevorzugt, im Rahmen der vorliegenden Erfindung die Säuren der Gruppe b) direkt in Form ihrer wasserlöslichen Salze einzusetzen bzw. die Säuren in den Konzentraten durch Zugabe von Alkalien, beispielsweise von Natriumhydroxid, zumindest weitgehend zu neutralisieren. Die Säuren der Gruppe a) setzt man als Ammoniumsalze ein, wobei man diese vorzugsweise dadurch herstellt, daß man bei der Herstellung des Konzentrats die freien Säuren mit den entsprechenden Aminen neutralisiert.

Im Rahmen der vorliegenden Erfindung ist es möglich, daß die Carbonsäuren der Gruppe a) die selben sind wie die Carbonsäuren der Gruppe b). Die Erfindung ist dann so zu verstehen, daß das Konzentrat teilweise die Ammoniumsalze dieser Säuren und teilweise andere Salze wie beispielsweise Alkalimetallsalze oder auch einen Überschuß an Carbonsäure enthält. In der Regel wird man jedoch unterschiedliche Carbonsäuren der Gruppe a) und der Gruppe b) einsetzen. Selbstverständlich ist es in dem als klare Lösung vorliegenden Konzentrat sowie dem hieraus durch Verdünnen mit Wasser hergestellten Motoreneinlaufmittel nicht möglich, die Ammoniumionen und ggf. anwesende Alkalimetallionen den jeweiligen Säureanionen zuzuordnen. Die Erfindung ist demnach so zu verstehen, daß die Lösungen solche Mengen an Anionen von Carbonsäuren der Gruppe a) und solche Mengen von Ammoniumkationen enthalten, daß diese rechnerisch zu den genannten Anteilen an Ammoniumsalzen zusammengefügt werden können.

In einer bevorzugten Ausführungsform ist das Konzentrat frei von Nitrit, Phosphat, Borat (insbesondere Borax) und Silicat. Hierdurch wird seine Verträglichkeit mit später einzufüllenden Motorenkühlmitteln verbessert, die heutzutage ebenfalls möglichst weitgehend frei sind von diesen Komponenten.

Die Carbonsäuren der Gruppe a) wählt man vorzugsweise aus aus Carbonsäuren mit 6 bis 12 C-Atomen. Die können geradkettig oder verzweigt, gesättigt oder ungesättigt sein. Vorzugsweise wählt man als Carbonsäuren der Gruppe a) Monocarbonsäuren. Insbesondere ist es bevorzugt, die Carbonsäuren der Gruppe a) auszuwählen aus n-Hexansäure, n-Heptansäure, n-Octansäure, n-Nonansäure, 2-Ethylhexansäure, 2,2-Dimethyloctansäure und 3,5,5-Trimethylhexansäure (= Isononansäure). Dabei ist 2-Ethylhexansäure besonders bevorzugt.

Die Ammoniumionen, die zusammen mit den Carbonsäuren der Gruppe a) zumindest rechnerisch zu Ammoniumsalzen zusammengesetzt werden können, können ausgewählt sein aus Ammoniumsalzen folgender Kationen: NH₄⁺, Mono-, Di- oder Trialkylammoniumkationen sowie aus Mono-, Di- oder Trialkanolammoniumkationen. Wegen einer möglichen Geruchsbelästigung sind dabei die unsubstituierten Ammoniumionen weniger bevorzugt. Die Mono-, Dioder Trialkylammoniumkationen können insbesondere ausgewählt sein aus Ammoniumkationen, die jeweils 1 bis 3 Methyl-, Ethyl-, Propyl- oder Butylgruppen tragen. Wegen ihrer besonders guten Korrosionsschutzwirkung sind Mono-, Dioder Trialkanolammoniumkationen besonders bevorzugt, insbesondere die Kationen von Ethanolaminen. Insbesondere ist es bevorzugt, als Ammoniumkationen das Triethanolammoniumkation vorzusehen.

Die zusätzlich zu den Ammoniumsalzen von Carbonsäuren der Gruppe a) vorzugsweise mit zu verwendenden Carbonsäuren der Gruppe b) (bzw. deren Salze) sind ausgewählt aus linearen oder verzweigten, gesättigten oder ungesättigten aliphatischen, araliphatischen oder aromatischen ein- oder mehrbasischen Carbonsäuren mit 4 bis 20 C-Atomen. Dabei gilt die Untergrenze der Kohlenstoffzahl, 4 C-Atome, für aliphatische Carbonsäuren. Aromatische Carbonsäuren müssen mindestens 7 C-Atome enthalten. Beispielsweise können diese Säuren der Gruppe b) ausgewählt sein aus Sebacinsäure, Caprylsäure, Nonansäure, Decansäure, Undecansäure, Benzoesäure, Zimtsäure und Gluconsäure. Dabei kann es günstig sein, ein Gemisch von 2 oder mehreren Carbonsäuren der Gruppe b) einzusetzen. Insbesondere kann es vorteilhaft sein, Mono- und Dicarbonsäuren der Gruppe b) im Gemisch zu verwenden.

Vorzugsweise enthält das erfindungsgemäße Konzentrat mehr als 1 und insbesondere mehr als 3 Gew.-% eines oder mehrerer Ammoniumsalze einer oder mehrerer Carbonsäuren der Gruppe a), jedoch vorzugsweise nicht mehr als 13 Gew.-% derartiger Salze. Vorzugsweise enthält das Konzentrat jeweils mindestens 0,01 Gew.-% Benzotriazol und/oder Tolyltriazol, jedoch vorzugsweise nicht mehr als jeweils 0,1 Gew.-% und insbesondere nicht mehr als jeweils 0,05 Gew.-%. Die fakultativ mit zu verwendenden Carbonsäuren der Gruppe b) setzt man vorzugsweise in solchen Mengen ein, daß sie nicht weniger als etwa 0,05 Gew.-%, jedoch vorzugsweise nicht mehr als etwa 9 Gew.-% des Konzentrats ausmachen.

Als weiterer Wirkstoff, der die Korrosionsschutzwirkung während des Einlaufens insbesondere auf Buntmetallen verstärkt, kann Mercaptobenzthiazol zusätzlich vorgesehen werden. Vorzugsweise wird dieser weitere Wirkstoff dem Konzentrat in Mengen von 0,002 bis 0,05 Gew.-% zugesetzt. Die Wirkung des Mercaptobenztiazols kann durch die zusätzliche Mitverwendung von Carboxymethylcellulose weiter gesteigert werden. Daher ist es bevorzugt, daß das erfindungsgemäße Konzentrat als weiteren Wirkstoff zusätzlich Carboxymethylcellulose enthält, vorzugsweise in Mengen von etwa 0,002 bis 0,5 Gew.-%.

Das wasserlösliche flüssigalkoholische Gefrierpunktserniedrigungsmittel wählt man vorzugsweise aus aus Monoethylenglykol, Diethylenglykol, Propylenglykol, Dipropylenglykol und/oder aus den Monomethyl-, Monoethyl-, Monopropyl- und Monobutylether der genannten Glykole. Besonders bevorzugt sind Monoethylenglykol und/oder Propylenglykol. Vorzugsweise enthält das Konzentrat des Motoreneinlaufmittels das wasserlösliche flüssigalkoholische Gefrierpunktsemiedrigungsmittel in einer Menge, bezogen die Gesamtmischung, von mindestens 40 Gew.-%. Aufgrund der Mindestmengen der als Korrosionsschutzsystem vorzugsweise eingesetzten Komponenten ergibt sich die bevorzugte Obergrenze des Anteils an flüssigalkoholischem Gefrierpunktserniedrigungsmittel in der Gesamtmischung zu 99,49 Gew.-%.

Bisher wurde erfindungsgemäß die Verwendung eines Konzentrats zur Herstellung eines Motoreneinlaufmittels beschrieben, aus dem man vor Ort durch Verdünnen mit Wasser das anwendungsfertige Motoreneinlaufmittel herstellt. In einem weiteren Aspekt umfaßt die Erfindung die Verwendung eines anwendungsfertigen wäßrigen Motoreneinlaufmittels zum Einlaufen von Verbrennungsmotoren, das dadurch erhältlich ist, daß man etwa 5 bis etwa 80 Volumenteile des vorstehend beschriebenen Konzentrats mit etwa 95 bis etwa 20 Volumenteilen Wasser vermischt. Selbstverständlich könnte eine derartige Mischung durch Auflösen der entsprechenden Komponenten in Wasser direkt vor Ort hergestellt werden. Wegen des hiermit verbundenen Aufwands ist dieses Verfahren jedoch weniger bevorzugt. Vielmehr ist es vorzuziehen, zentral ein Konzentrat für ein derartiges wäßriges Motoreneinlaufmittel herzustellen und an die verschiedenen Verbraucher auszuliefern, die es vor Ort mit der jeweils erforderliche Wassermenge verdünnen.

Die erfindungsgemäße Verwendung des wäßrigen Motoreneinlaufmittels beim Einlaufen von Verbrennungsmotoren hat den Vorteil, daß die Motoren nicht nur während des Einlaufens gekühlt und vor Korrosion geschützt werden, sondern daß der Korrosionsschutz auch nach dem weitgehenden Ablassen des Motoreneinlaufmittels noch über einen Zeitraum von mehreren Wochen, beispielsweise bis zu 12 Wochen, anhält. Weiterhin sind die erfindungsgemäßen Motoreneinlaufmittel gut mit modernen Kühlflüssigkeiten verträglich, so daß keine Niederschläge auftreten, wenn die Reste des Motoreneinlaufmittels beim Befüllen der Motoren mit dem späteren Kühlmittel vermischt werden.

### Ausführungsbeispiele

Der Langzeit-Korrosionsschutz von typischen Motorenmaterialien in dem wäßrigen Motoreneinlaufmittel und in der Dampfphase darüber wurde folgendermaßen überprüft:

Man stellte erfindungsgemäße Konzentrate sowie Vergleichskonzentrate gemäß Tabelle 1 her. Dabei wurde als flüssigalkoholisches Gefrierpunktserniedrigungsmittel Monoethylenglykol vorgelegt und die anderen Komponenten wurden in der angegebenen Reihenfolge hierin gelöst. Für die Anwendungsprüfung wurden für Beispiel 1 10 Volumenteile des Konzentrats mit 90 Volumenteilen Wasser vermischt, für das Beispiel 2 wurden 40 Volumenteile Konzentrat mit 60 Volumenteilen Wasser verdünnt. Das Wasser hatte jeweils eine Zusammensetzung gemäß ASTM-D 1384. Bei den Vergleichskonzentraten wurden bei Vergleich 1 10 Volumenteile Konzentrat mit 90 Volumenteilen Wasser, bei Vergleich 2 und 3 40 Volumenteile Konzentrat mit 60 Volumenteilen Wasser gemäß ASTM-D 1384 versetzt. Als Prüfkörper wurden Bleche verschiedener Metalle gemäß ASTM-D 1384 vorbereitet und elektrisch leitend zu einer Kette verbunden. Die Bleche dieser "ASTM-Kette" wurden zunächst für 15 Minuten ganz in das jeweilige wäßrige Motoreneinlaufinittel getaucht. Dann wurden sie so weit aus der wäßrigen Mischung herausgezogen, daß die jeweils untere Hälfte in der Wasserphase verblieb während die jeweils obere Hälfte sich im Dampfraum befand. Diese Anordnung wurde über den gesamten Prüfzeitraum in ein geschlossenes Behältnis gestellt. Der Prüfzeitraum betrug 12 Wochen, wobei die Prüfanordnung jeweils für 8 Stunden bei 30 °C und danach jeweils für 8 Stunden bei Raumtemperatur im ständigen Wechsel gehalten wurde. Die Korrosion in der Wasserphase und in der Dampfphase wurde nach 12 Wochen visuell beurteilt. Die Ergebnisse sind in Tabelle 2 zusammengefaßt.

Die Ergebnisse der Korrosionsprüfung zeigen, daß die erfindungsgemäßen Motoreneinlaufmittel insbesondere bei den wichtigen Materialien Stahl und Grauguß einen wesentlich besseren Korrosionsschutz in der Dampfphase brachten als die Mittel gemäß den Vergleichsbeispielen.

**Tabelle 1**

| **Zusammensetzung des Motoreneinlaufmittels (in Gew.-%) (Konzentrat)** **Der Rest zu 100 Gew.-% ist jeweils Monoethylenglycol.** | | | | | |
|---|---|---|---|---|---|
| **Rohstoff** | **Beisp.1** | **Beisp.2** | **Vergl.1** | **Vergl.2** | **Vergl.3** |
| Benzotriazol | 0,03 | 0,01 | - | 0,15 | 0,03 |
| Tolyltriazol | 0,03 | 0,01 | 0,4 | - | 0,03 |
| Triethanolaminsalz der 2-Ethylhexansäure | 12,0 | 4,5 | - | - | - |
| 2-Ethylhexansäure | 1,0 | 0,5 | 6,5 | 2,5 | 1,0 |
| Sebacinsäure | 3,0 | 1,0 | 1,5 | 1,0 | 3,0 |
| NaOH | so daß der pH größer 7,5 | | | | |

**Tabelle 2**

| **Korrosionstestauswertung** | | | | | | | | | | |
|---|---|---|---|---|---|---|---|---|---|---|
| Metalle | Beisp.1 | | Beisp.2 | | Vergl.1 | | Vergl.2 | | Vergl.3 | |
| | L | D | L | D | L | D | L | D | L | D |
| Kupfer | G | G | G | G | X | G | G | X | G | X |
| Lot | G | G | G | G | G | G | G | G | G | G |
| Messing | G | G | G | G | G | X | G | X | G | X |
| Stahl | G | G | G | G | G | R | X | R | G | X |
| Grauguß | G | G | G | G | G | R | G | S | G | X |
| Aluminium | X | G | X | G | X | X | X | X | X | X |
| L - Blech in Lösung | | | | | | | | | | |
| D - Blech in Dampfphase | | | | | | | | | | |
| G - Keine Korrosionserscheinungen, kein Anlaufen des Bleches, Blech hell | | | | | | | | | | |
| X- Keine Korrosoinserscheinungen, Blech wenig gedunkelt oder fleckig | | | | | | | | | | |
| R - Deutlicher Korrosions- bzw. Rostansatz | | | | | | | | | | |
| S - Deutlicher Korrosions- bzw. Rostansatz, Blech stark gedunkelt | | | | | | | | | | |

## Patentansprüche

1. Verwendung eines Konzentrats, das als Hauptkomponente ein wasserlösliches flüssigalkoholisches Gefrierpunktenuedrigungsinittel und zusätzlich eine wirksame Menge eines oder mehrerer Ammoniumsalze einer oder mehrerer Carbonsäuren einer Gruppe a) enthält, wobei die Carbonsäuren der Gruppe a) 5 bis 18 C-Atomen aufweisen, zur Herstellung eines Motoreneinlaufmittels durch Verdünnen mit Wasser.

2. Verwendung nach Anspruch 1, **dadurch gekennzeichnet, daß** das Konzentrat zusätzlich 0,005 bis 1 Gew.-%, bezogen auf die Gesamtzusammensetzung, eines oder mehrerer Triazole enthält.

3. Verwendung nach einem oder beiden der Ansprüche 1 und 2, **dadurch gekennzeichnet, daß** das Konzentrat, bezogen auf die Gesamtzusammensetzung,
0,005 bis 0,5 Gew.-% Tolyltriazol und/oder
0,005 bis 0,5 Gew.-% Benzotriazol,
0,5 bis 15 Gew.-% eines oder mehrerer Ammoniumsalze einer oder mehrerer Carbonsäuren einer Gruppe a) mit 5 bis 18 C-Atomen und
0,005 bis 10 Gew.-% einer oder mehrerer Carbonsäuren einer Gruppe b), die ausgewählt sind aus linearen gesättigten oder ungesättigten aliphatischen, araliphatischen oder aromatischen ein- oder mehrbasichen Carbonsäuren mit 4 bis 20 C-Atomen,
enthält, wobei der Rest zu 100 Gew-% aus dem flüssigalkoholischen Gefrierpunkterniedrigungsmittel besteht, das zusätzlich Alkalien, Wasser und/oder weitere Wirkstoffe enthalten kann.

4. Verwendung nach einem oder mehreren der Ansprüche 1 bis 3, **dadurch gekennzeichnet, daß** das Konzentrat frei ist von Nitrit, Phosphat, Borat und Silicat.

5. Verwendung nach einem oder mehreren der Ansprüche 1 bis 4, **dadurch gekennzeichnet, daß** die Carbonsäuren der Gruppe a) ausgewählt sind aus Carbonsäuren mit 6 bis 12 C-Atomen.

6. Verwendung nach Anspruch 5, **dadurch gekennzeichnet, daß** die Carbonsäuren der Gruppe a) ausgewählt sind aus n-Hexansäure, n-Heptansäure, n-Octansäure, n-Nonansäure, 2-Ethylhexansäure, 2,2-Dimethyloctansäure und 3,5,5-Trimethylhexansäure.

7. Verwendung nach einem oder mehreren der Ansprüche 1 bis 6, **dadurch gekennzeichnet, daß** die Ammoniumsalze der Carbonsäuren der Gruppe a) ausgewählt sind aus Ammoniumsalzen mit den Kationen: NH₄⁺, Mono-, Di- oder Trialkylammoniumkationen sowie Mono-, Di- oder Trialkanolammoniumkationen.

8. Verwendung nach einem oder mehreren der Ansprüche 1 bis 7, **dadurch gekennzeichnet, daß** die Carbonsäuren der Gruppe b) ausgewählt sind aus Sebacinsäure, Caprylsäure, Nonansäure, Decansäure, Undecansäure, Benzoesäure, Zimtsäure und Gluconsäure.

9. Verwendung nach einem oder mehreren der Ansprüche 1 bis 8, **dadurch gekennzeichnet, daß** das Konzentrat als weiteren Wirkstoff zusätzlich Mercaptobenzthiazol enthält.

10. Verwendung nach einem oder mehreren der Ansprüche 1 bis 9, **dadurch gekennzeichnet, daß** das wasserlösliche flüssigalkoholische Gefrierpunktserniedrigungsmittel ausgewählt ist aus Monoethylenglykol, Diethylenglykol, Propylenglykol, Dipropylenglykol und/oder aus den Monomethyl-, Monoethyl-, Monopropyl- und Monobutylether der genannten Glykole.

11. Verwendung nach einem oder mehreren der Ansprüche 1 bis 10, **dadurch gekennzeichnet, daß** das Konzentrat das wasserlösliche flüssigalkoholische Gefrierpunktserniedrigungsmittel in einer Menge, bezogen auf die Gesamtmischung, von 40 bis 99,49 Gew.-% enthält.

12. Verwendung nach einem oder mehreren der Ansprüche 1 bis 11, **dadurch gekennzeichnet, daß** man zur Herstellung des Motoreneinlaufmittels 5 bis 80 Volumenteile des Konzentrats mit 95 bis 20 Volumenteilen Wasser vermischt.

13. Verwendung einer wäßrigen Lösung, die dadurch erhältlich ist, daß man 5 bis 80 Volumenteile eines Konzentrats mit einer Zusammensetzung gemäß einem oder mehreren der Ansprüche 1 bis 11 mit 95 bis 20 Volumenteilen Wasser vermischt, als Motoreneinlaufmittel

## Claims

1. Use of a concentrate containing as the main component a water-soluble liquid alcoholic freezing-point depressant and additionally an effective amount of one or more ammonium salts of one or more carboxylic acids of a group a), wherein said carboxylic acids of group a) have from 5 to 18 carbon atoms, for preparing an engine running-in agent by thinning said concentrate with water.

2. The use according to claim 1, **characterized in that** said concentrate additionally contains from 0.005 to 1% by weight, based on the total composition, of one or more triazoles.

3. The use according to either or both of claims 1 and 2, **characterized in that** said concentrate contains, based on the total composition:
from 0.005 to 0.5% by weight of tolyltriazole; and/or
from 0.005 to 0.5% by weight of benzotriazole;
from 0.5 to 15% by weight of one or more ammonium salts of one or more carboxylic acids of a group a) having from 5 to 18 carbon atoms; and
from 0.005 to 10% by weight of one or more carboxylic acids of a group b) selected from linear saturated or unsaturated aliphatic, araliphatic or aromatic mono- or polybasic carboxylic acids having from 4 to 20 carbon atoms;
the balance to make 100% consisting of said liquid alcoholic freezing-point depressant which may additionally contain alkalis, water and/or other active substances.

4. The use according to one or more of claims 1 to 3, **characterized in that** said concentrate is free from nitrite, phosphate, borate and silicate.

5. The use according to one or more of claims 1 to 4, **characterized in that** said carboxylic acids of group a) are selected from carboxylic acids having from 6 to 12 carbon atoms.

6. The use according to claim 5, **characterized in that** said carboxylic acids of group a) are selected from n-hexanoic acid, n-heptanoic acid, n-octanoic acid, n-nonanoic acid, 2-ethylhexanoic acid, 2,2-dimethyloctanoic acid and 3,5,5-trimethylhexanoic acid.

7. The use according to one or more of claims 1 to 6, **characterized in that** said ammonium salts of said carboxylic acids of group a) are selected from ammonium salts comprising the cations NH₄⁺, mono-, di- or trialkylammonium cations as well as mono-, di- or trialkanolammonium cations.

8. The use according to one or more of claims 1 to 7, **characterized in that** said carboxylic acids of group b) are selected from sebacic acid, caprylic acid, nonanoic acid, decanoic acid, undecanoic acid, benzoic acid, cinnamic acid - and gluconic acid.

9. The use according to one or more of claims 1 to 8, **characterized in that** said concentrate additionally contains mercaptobenzothiazole as an additional active substance.

10. The use according to one or more of claims 1 to 9, **characterized in that** said water-soluble liquid alcoholic freezing-point depressant is selected from monoethylene glycol, diethylene glycol, propylene glycol, dipropylene glycol and/or from the monomethyl, monoethyl, monopropyl and monobutyl ethers of the above glycols.

11. The use according to one or more of claims 1 to 10, **characterized in that** said concentrate contains said water-soluble liquid alcoholic freezing-point depressant in an amount, based on the total mixture, of from 40 to 99.49% by weight.

12. The use according to one or more of claims 1 to 11, **characterized in that**, for preparing said engine running-in agent, from 5 to 80 volume parts of said concentrate is mixed with from 95 to 20 volume parts of water.

13. Use of an aqueous solution obtainable by mixing from 5 to 80 volume parts of a concentrate having a composition according to one or more of claims 1 to 11 with from 95 to 20 volume parts of water, as an engine running-in agent.

## Revendications

1. Utilisation d'un concentré qui contient comme composant principal un agent d'abaissement du point de congélation, hydrosoluble, liquide, alcoolique et en outre, une quantité efficace d'un ou de plusieurs sels d'ammonium d'un ou de plusieurs acides carboxyliques d'un groupe a), les acides carboxyliques du groupe a) comportant 5 à 18 atomes C, pour la préparation d'un agent de rodage de moteur par dilution à l'eau.

2. Utilisation selon la revendication 1, **caractérisée en ce que** le concentré contient en outre 0,005 à 1 % en poids, rapporté à la composition totale, d'un ou de plusieurs triazoles.

3. Utilisation selon une ou deux des revendications 1 et 2, **caractérisée en ce que** le concentré contient, rapporté à la composition totale,
0,005 à 0,5 % en poids de tolyltriazole et/ou
0,005 à 0,5 % en poids de benzotriazole,
0,5 à 15 % en poids d'un ou de plusieurs sels d'ammonium d'un ou de plusieurs acides carboxyliques d'un groupe a) avec 5 à 18 atomes C et
0,005 à 10 % en poids d'un ou de plusieurs acides carboxyliques d'un groupe b), qui sont choisis parmi les acides carboxyliques linéaires saturés ou insaturés aliphatiques, araliphatiques ou aromatiques mono ou polybasiques avec 4 à 20 atomes C,
le complément à 100 % étant constitué par l'agent d'abaissement du point de congélation liquide alcoolique, qui peut en outre contenir des alcalis, de l'eau et/ou d'autres substances actives.

4. Utilisation selon l'une des revendications 1 à 3, **caractérisée en ce que** le concentré est exempt de nitrite, de phosphate, de borate et de silicate.

5. Utilisation selon une ou plusieurs des revendications 1 à 4, **caractérisée en ce que** les acides carboxyliques du groupe a) sont choisis parmi les acides carboxyliques ayant 6 à 12 atomes C.

6. Utilisation selon la revendication 5, **caractérisée en ce que** les acides carboxyliques du groupe a) sont choisis parmi l'acide n-hexanoïque, n-heptanoïque, n-octanoïque, n-nonanoïque, 2-éthylhexanoïque, 2,2-diméthyloctanoïque et 3,5,5-triméthylhexanoïque.

7. Utilisation selon une ou plusieurs des revendications 1 à 6, **caractérisée en ce que** les sels d'ammonium des acides carboxyliques du groupe a) sont choisis à partir des sels d'ammonium avec les cations :
NH₄⁺, les cations mono, di ou trialkylammonium ainsi que les cations mono, di ou trialcanoammonium.

8. Utilisation selon une ou plusieurs des revendications 1 à 7, **caractérisée en ce que** les acides carboxyliques du groupe b) sont choisis à partir de l'acide sébacinique, de l'acide caprylique, de l'acide nonanoïque, de l'acide décanoïque, de l'acide undécanoïque, de l'acide benzoïque, de l'acide cinnamique et de l'acide gluconique.

9. Utilisation selon une ou plusieurs des revendications 1 à 8, **caractérisée en ce que** le concentré contient de plus du mercaptobenzothiazole comme substance active supplémentaire.

10. Utilisation selon une ou plusieurs des revendications 1 à 9, **caractérisé en ce que** l'agent d'abaissement du point de congélation hydrosoluble liquide alcoolique est choisi parmi le monoéthylène-glycol, le diéthylène-glycol, le propylène-glycol, le dipropylène-glycol, et/ou parmi les éthers de monométhyle, monoéthyle, monopropyle et de monobutyle des glycols cités.

11. Utilisation selon une ou plusieurs des revendications 1 à 10, **caractérisée en ce que** le concentré contient l'agent d'abaissement du point de congélation hydrosoluble, liquide alcoolique dans une quantité de 40 à 99,49 % en poids rapportés au mélange total.

12. Utilisation selon une ou plusieurs des revendications 1 à 11, **caractérisée en ce que** pour la fabrication de l'agent de rodage de moteur, on mélange 5 à 80 parties en volume du concentré avec 95 à 20 parties en volume d'eau.

13. Utilisation d'une solution aqueuse qui peut être obtenue en mélangeant 5 à 80 parties en volume d'un concentré avec une composition selon une ou plusieurs des revendications 1 à 11 avec 95 à 20 parties en volume d'eau, en tant qu'agent de rodage de moteur.
